# EUROPEAN PATENT APPLICATION

(11) **EP 1 806 929 A1**
(43) Date of publication of application: **11.07.2007**
(21) Application number: 06018805.9
(22) Date of filing: 07.09.2006
(51) Int. Cl.: H04N 7/26

(54) **Transcoding video information for digital video recording (DVR) trick modes**

(30) Priority: 04.01.2006 US 756130 P; 10.03.2006 US 372505
(71) Applicant: Broadcom Corporation, Irvine, CA 92617 (US)
(72) Inventor: Wan, Wade, Orange, CA 92867-6516 (US); Chen, Xuemin, San Diego, CA 92129 (US)
(74) Representative: Jehle, Volker Armin

(57) **Abstract**

Aspects of a method and system for transcoding video information to enable digital video recording (DVR) trick modes are provided. A current picture may be identified that is used in decoding additional pictures and not independently decodable. The picture may be decoded and re-encoded so that it is independently decodable. The re-encoded picture may be stored in a hard drive or network storage and may be accessed to perform DVR trick modes. The identified picture may be descrambled prior to the decoding and re-encoding operations. Moreover, the re-encoded picture may be scrambled prior to storage in a hard drive or network storage.

## Description

### CROSS-REFERENCE TO RELATED APPLICATIONS/INCORPORATION BY REFERENCE

This patent application makes reference to, claims priority to and claims benefit from United States Provisional Patent Application Serial No. 60/756130 filed on January 4, 2006.

The above stated application is hereby incorporated by reference in its entirety.

### FIELD OF THE INVENTION

Certain embodiments of the invention relate to processing digital video. More specifically, certain embodiments of the invention relate to a method and system for transcoding video information to enable digital video recording (DVR) trick modes.

### BACKGROUND OF THE INVENTION

Digital video recording (DVR) applications are becoming more prevalent in today's marketplace. These applications typically involve recording digital terrestrial, cable or satellite bit streams to a local or network storage device such as a hard disk drive. The local availability of the bit stream during playback allows users to pause, fast forward and rewind content similar to the operation of a video cassette recorder (VCR). These special modes of video operation are often referred to as trick modes or trick-play modes. A common difficulty with implementing trick modes is the decoding dependency between pictures in a digital video bit stream.

A digital video bit stream may be partitioned into successive groups or sequences of pictures or GOPs, where each picture or frame in the GOP may be of a pre-defined picture coding type. In this regard, a video standard that is generally considered is the MPEG-2 standard, defined in ISO/IEC JTC1/SC29, "Generic coding of moving pictures and associated audio", ISO/IEC 13818-2, Draft International Standard, November 1994. In MPEG-2 applications, the picture coding types may comprise intra-coded pictures, predicted pictures, and bidirectional-predicted pictures. The intra-coded or I-pictures may only use the information within the picture to perform video compression or encoding. These self-contained I-pictures provide a base value or anchor that is an estimate of the value of succeeding pictures. Each GOP may generally start with a self-contained I-picture as the reference or anchor frame from which the other frames in the group may be generated for display. A GOP may start with an I-picture when describing the transmission, decoding, and/or processing order of a picture sequence, for example.

The GOP frequency, and correspondingly the frequency or periodicity of I-pictures, may be driven by specific application spaces. The predicted or P-pictures may use a motion estimation scheme that generates motion vectors that may be utilized to predict picture elements from previously encoded pictures. Compressing or encoding the difference between predicted samples and the source value results in better coding efficiency than that which may be achieved by transmitting the encoded version of the source picture information. At a receiver or decoder side, the compressed or encoded difference picture is decoded and subsequently added to a predicted picture for display.

The bidirectional-predicted pictures or B-pictures may use multiple pictures that occur in a future location in the GOP and/or in a past location in the GOP to predict the image samples. As with P-pictures, motion estimation may be used for pixel prediction in B-pictures and the difference between the original source and the predicted pictures may be compressed. At the receiver or decoder end, one or more B-pictures may be motion compensated and may be added to the decoded version of the compressed difference signal for display. Since both the P-pictures and B-pictures may be based on other pictures, they may be referred to as inter-coded pictures.

Another video standard is the advanced video coding (AVC) standard, JVT Editors (T. Wiegand, G. Sullivan, A. Luthra), "Draft ITU-T Recommendation and final draft international standard of joint video specification", ITU-T Rec.H.264 | ISO/IEC 14496-10 AVC, JVT-G050r1, Geneva, May 2003, which is also known as JVT, H.264, or MPEG-4 Part 10. In the AVC standard, instead of B-picture, P-picture, and I-picture types, the type definitions are made slice-wise, where a slice may cover an entire picture. However, it is commonly accepted practice to refer to I-pictures as pictures which only contain intra-coded or I-slices, P-pictures as pictures which may contain predicted slices (P-slices) or I-slices, and B-pictures as pictures which may contain bidirectional or bi-predictive slices (B-slices), P-slices, or I-slices. In the AVC standard, the B-pictures may also be used for prediction, further complicating the decoding dependency between pictures in a bit stream.

In some instances when a digital video processing device implements a trick mode, a large amount of decoding processing and/or decoding memory may be necessary as a result of the dependency that exists between pictures in a digital video bit stream. Developing systems that reduce the necessary processing and/or memory may enable more effective and flexible trick modes in digital video recording operations.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for transcoding video information to enable digital video recording (DVR) trick modes, substantially as shown in and/or described in connection with at least one of the figures, as set forth more completely in the claims.
According to an aspect of the invention, a method for processing video information is provided, the method comprising:
decoding a current picture in a video stream that is used in decoding at least one other picture in said video stream and does require information from any other picture to be decoded; and
re-encoding said decoded current picture so that it does not require information from any other picture to be decoded.
Advantageously, the method further comprises storing said re-encoded current picture.
Advantageously, the method further comprises storing said current picture.
Advantageously, the method further comprises selecting said stored re-encoded current picture for trick mode operations.
Advantageously, the method further comprises selecting said stored current picture for normal playback operations.
Advantageously, the method further comprises identifying based on at least one signal, if said current picture is used in decoding at least one other picture in said video stream and does require information from any other picture to be decoded.
Advantageously, the method further comprises descrambling said current picture in said video stream before said decoding.
Advantageously, the method further comprises scrambling said re-encoded current picture after said re-encoding.
Advantageously, the method further comprises storing said scrambled re-encoded current picture.
According to an aspect of the invention, a machine-readable storage is provided having stored thereon, a computer program having at least one code section for processing video information, the at least one code section being executable by a machine for causing the machine to perform steps comprising:
decoding a current picture in a video stream that is used in decoding at least one other picture in said video stream and does require information from any other picture to be decoded; and
re-encoding said decoded current picture so that it does not require information from any other picture to be decoded.
Advantageously, the machine-readable storage further comprises code for storing said re-encoded current picture.
Advantageously, the machine-readable storage further comprises code for identifying based on at least one signal, if said current picture is used in decoding at least one other picture in said video stream and does require information from any other picture to be decoded.
Advantageously, the machine-readable storage further comprises code for descrambling said current picture in said video stream before said decoding.
Advantageously, the machine-readable storage further comprises code for scrambling said re-encoded current picture after said re-encoding.
Advantageously, the machine-readable storage further comprises code for storing said scrambled re-encoded current picture.
According to an aspect of the invention, a system for processing video information is provided, the system comprising:
circuitry that enables decoding a current picture in a video stream that is used in decoding at least one other picture in said video stream and does require information from any other picture to be decoded; and
said circuitry enables re-encoding said decoded current picture so that it does not require information from any other picture to be decoded.
Advantageously, said circuitry enables storing said re-encoded current picture.
Advantageously, said circuitry enables identifying based on at least one signal, if said current picture is used in decoding at least one other picture in said video stream and does require information from any other picture to be decoded.
Advantageously, said circuitry enables descrambling said current picture in said video stream before said decoding.
Advantageously, said circuitry enables scrambling said re-encoded current picture after said re-encoding.
Advantageously, said circuitry enables storing said scrambled re-encoded current picture.
Advantageously, said circuitry enables said re-encoding of said decoded current pixel only so that it does not require information from any other picture to be decoded.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary digital video recording device, in accordance with an embodiment of the invention.

FIG. 2 is a diagram that illustrates an example of the decoding dependency between pictures in a MPEG-2 video bit stream where the arrows represent the decoding dependencies, which may be utilized in connection with an embodiment of the invention.

FIG. 3 is a flow diagram illustrating transcoding of certain pictures in a digital video bit stream, in accordance with an embodiment of the invention.

FIG. 4 is a flow diagram illustrating another embodiment of transcoding of certain pictures in a digital video bit stream, in accordance with an embodiment of the invention.

FIG. 5 is a diagram that illustrates the result of re-encoding all the P-pictures in FIG. 1 to I-pictures, in accordance with an embodiment of the invention.

FIG. 6 illustrates exemplary use of B-pictures for prediction, which may be utilized in connection with an embodiment of the invention.

FIG. 7 is a diagram illustrating another exemplary embodiment for transcoding certain pictures in a digital video bit stream, in accordance with an embodiment of the invention.

FIG. 8 is a block diagram illustrating application of the principles of FIG. 7 to the bit stream illustrated in FIG. 6, in accordance with an embodiment of the invention.

FIG. 9A is a block diagram that illustrates an exemplary system that may be utilized for enabling digital video recording trick modes, in accordance with an embodiment of the invention.

FIG. 9B is a block diagram that illustrates another exemplary system that may be utilized for enabling digital video recording trick modes, in accordance with an embodiment of the invention.

### DETAILED DESCRIPTION OF THE INVENTION

Certain embodiments of the invention may be found in a method and system for transcoding video information to enable digital video recording (DVR) trick modes. A current picture may be identified that is used in decoding additional pictures and not independently decodable. The picture may be decoded and re-encoded so that it is independently decodable. The re-encoded picture may be stored in a hard drive or network storage and may be accessed to perform DVR trick modes. The identified picture may be descrambled prior to the decoding and re-encoding operations. Moreover, the re-encoded picture may be scrambled prior to storage in a hard drive or network storage.

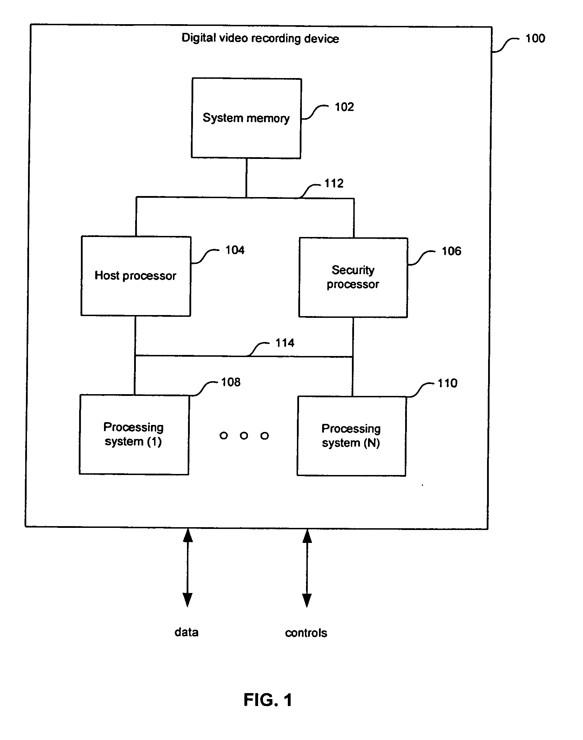

FIG. 1 is a block diagram illustrating an exemplary digital video recording device, in accordance with an embodiment of the invention. Referring to FIG. 1, there is shown a digital video recording (DVR) device 100 that may comprise a host processor 104, a system memory 102, a security processor 106, a processing system 108 through a processing system 110, a memory bus 112, and a data bus 114. The DVR device 100 may enable receiving and/or transferring data with other systems and may also enable receiving and/or transferring control signals with other systems. For example, the DVR device 100 may communicate data with a network storage device. The DVR device 100 need not be limited to the exemplary embodiment described in FIG. 1 and may be implemented using alternative architectures. The DVR 100 may be utilized for implementing trick modes, such as fast-forward, pause, skip, fast-reverse, and/or timeshifting, for example.

The host processor 104 may comprise suitable logic, circuitry, and/or code that may enable data processing and/or system control operations associated with the DVR device 100. The host processor 104 may enable communication with the system memory 102 via, for example, the memory bus 112. The host processor 104 may also enable communication with the security processor 106 and/or the processing system 108 through the processing system 110 via, for example, the data bus 114. The system memory 102 may comprise suitable logic, circuitry, and/or code that may enable storage of data, control information, and/or operational information. In this regard, the system memory 102 may comprise different memory technologies, for example, random access memory (RAM) and read only memory (ROM), and may be implemented utilizing separate memory devices or integrated circuits (ICs). For example, a portion of the system memory 102 may be implemented in the form of a hard disk drive (HDD) and/or a FLASH memory. In some instances, information associated with a security policy and/or an access control matrix utilized by the security processor 106 may be implemented in portions of the system memory 102.

The security processor 106 may comprise suitable logic, circuitry, and/or code that may enable a plurality of security operations when processing data received by the DVR device 100. The security operations may include, but need not be limited to, nonvolatile memory (NVM) security, key ladders, challenge-response authentication, memory data signature verification, secure scrambler configuration, and security assurance logic, for example. In this regard, the security processor 206 may comprise a plurality of security components, which may be adapted to perform various features associated with the security operations. The processing system 108 through the processing system 110 may each comprise suitable logic, circuitry, and/or code that may enable a plurality of processing operations on the data received by the DVR device 100. For example, processing systems may be utilized to process incoming video streams for a plurality of video stream standards. Individual processing systems or combinations of processing systems may operate as subsystems of the DVR device 100.

In operation, the security processor 106 may receive access requests from a user to perform certain data operations within the DVR device 100. The security processor 106 may verify access rights or privileges that the user may have to a security component in the security processor 106 based on the access control matrix. The security processor 106 may determine whether access to a security component is provided independently of the host processor 104, that is, the security processor 106 may not operate as a slave to the host processor 104. When access to the security component is verified, the security processor 206 may enable the appropriate data processing operations. In this regard, at least one of the processing systems 108 through 110 may be utilized to process data in the DVR device 100. The host processor 104 may be utilized to control non-secure aspects of the operation of the DVR device 100. During data processing operations, at least a portion of the processed data may be stored in a portion of the system memory 102. In some instances, at least a portion of the processed data may be stored externally to the DVR device 100 and may be later accessed for further processing when appropriate.

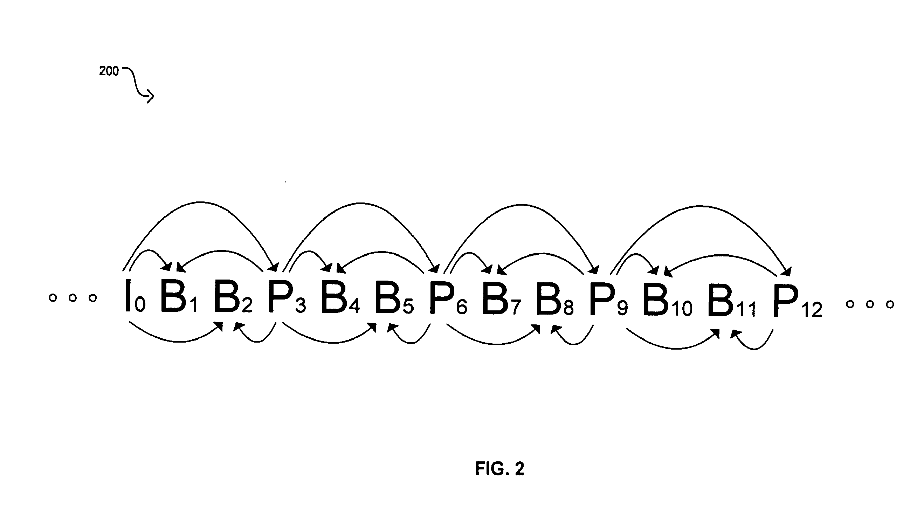

FIG. 2 is a diagram that illustrates an example of the decoding dependency between pictures in a MPEG-2 video bit stream where the arrows represent the decoding dependencies, which may be utilized in connection with an embodiment of the invention. Referring to FIG. 2, there is shown an MPEG-2 picture stream 200 that may be characterized by a particular sequence of pictures types, such as the "I₀B₁B₂P₃B₄B₅P₆B₇B₈P₉B₁₀B₁₁P₁₂" sequence. The subindex utilized to identify the pictures in the sequence is labeled following the display order, for example. In this regard, I-pictures are encoded independently, P-pictures are encoded dependently using prediction from one other picture, and B-pictures are encoded dependently using prediction from two other pictures. In the example shown in FIG. 2, the picture I₀ is independently encoded, picture P₃ is dependently encoded from picture I₀, and picture B₄ is dependently encoded from pictures P₃ and P₆, for example.

Since P-pictures require a reference picture and may also be used as the reference picture for prediction of another picture, this may result in complicated decoding dependencies between pictures as shown in Fig. 2. In this example, picture B₁₀ is predicted from pictures P₉ and P₁₂. However, picture P₉ is predicted from picture P₆, which in turn is predicted from picture P₃. Moreover, picture P₃ is predicted from picture I₀. Thus, five pictures, pictures I₀, P₃, P₆, P₉, and P₁₂, need to be decoded before picture B₁₀ may be decoded. In this regard, the decoding of pictures may require that resources, such as computational or processing power and/or memory, be allocated and as a result, complicated decoding dependencies may require more resources than an application may be able to provide at a given point in time. For example, when a user and/or application requires a 10X fast forward starting from picture l₀, there may be instances when sufficient resources are not available to decode the I₀, P₃, P₆, P₉, and P₁₂ in time to decode picture B₁₀ to display it properly for the trick mode.

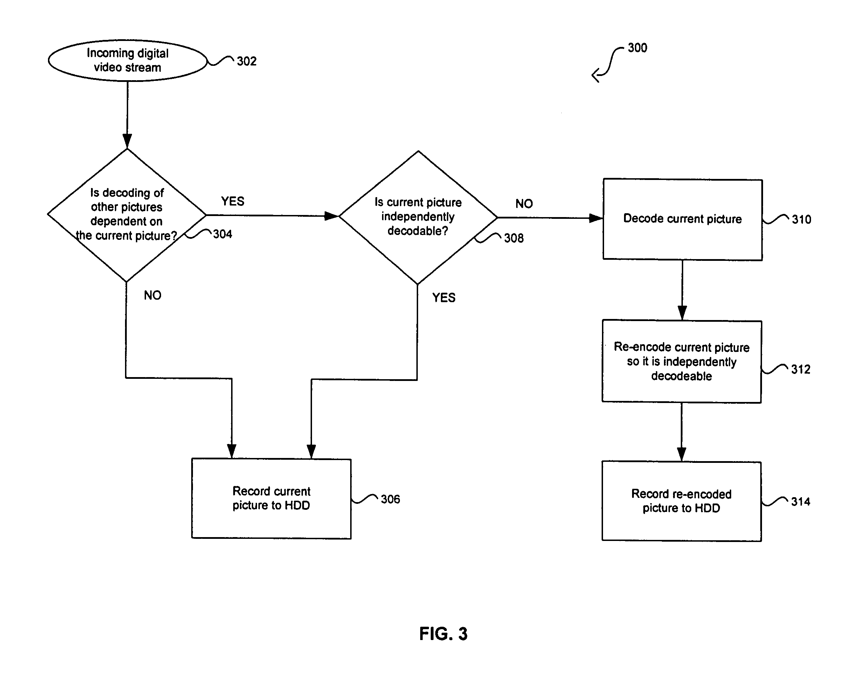

FIG. 3 is a flow diagram illustrating transcoding of certain pictures in a digital video bit stream, in accordance with an embodiment of the invention. Referring to FIG. 3, there is shown a flow diagram 300. In step 302, an incoming digital video stream may be received by, for example, a digital video recording device such as the DVR device 100 in FIG. 1. In step 304, a portion of the DVR device 100, such as one of the processing systems 108 through 110 or the host processor 104, for example, may verify that a current picture in the stream is such that the decoding of other pictures in the video stream is dependent on the current picture. When the current picture is not utilized as a reference frame or picture, then the process may proceed to step 306. In step 306, the current picture may be recorded onto memory. In this regard, the memory in step 306 may be a hard disk drive (HDD) that may be part of a system memory, such as the system memory 102 in FIG. 1. The memory in step 306 may also be part of network storage that is external to the DVR device 100.

Returning to step 304, when the current picture is a reference picture, that is, the current picture is utilized to decode other pictures, the process may proceed to step 308. In step 308, the DVR device 100 may verify whether current picture is independently decodable, that is, the decoding of the current picture is not dependent on other pictures. A picture is independently decodable if the picture may be decoded on it own without any dependency on another picture. When the current picture is independently decodable, the process may proceed to step 306 where the current picture may be recorded to memory, such as a HDD or network storage. When the current picture is not independently decodable, then the process may proceed to step 310.

In step 310, the current picture may be decoded. In step 312, the decoded picture that results from step 310 may be re-encoded such that the re-encoded picture is independently decodable. In step 314, the re-encoded picture may be recorded or stored in memory, such as an HDD or network storage, for example. Note that the term transcoding may refer to the process of decoding and then re-encoding the current picture such that the re-encoded picture is independently decodable. The implementation of transcoding may reduce the decoding dependency that may exist between pictures. Transcoding operations need not be limited to the exemplary steps illustrated in FIG. 3.

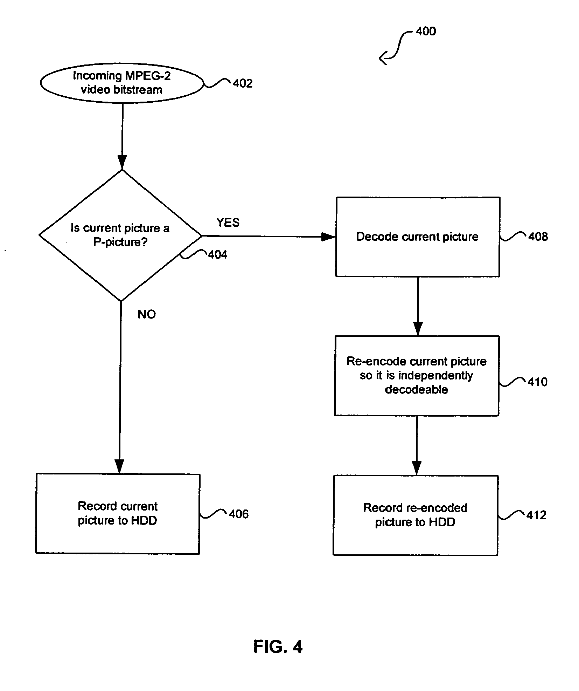

FIG. 4 is a flow diagram illustrating another embodiment of transcoding of certain pictures in a digital video bit stream, in accordance with an embodiment of the invention. Referring to FIG. 4, there is shown a flow diagram 400. In step 402, an incoming MPEG-2 video bit stream may be received by, for example, a digital video recording device such as the DVR device 100 in FIG. 1. In step 404, a portion of the DVR device 100, such as one of the processing systems 108 through 110 or the host processor 104, for example, may verify that a current picture is a P-picture. This verification may be achieved by reading a signal, such as the picture_coding_type field in the picture header, for example. When the current picture is not a P-picture, then the process may proceed to step 406. In step 406, the current picture may be recorded onto memory. In this regard, the memory in step 406 may be an HDD or a FLASH memory that may be part of a system memory, such as the system memory 102 in FIG. 1. The memory in step 406 may also be part of network storage that is external to the DVR device 100.

Returning to step 404, when the current picture is a P-picture, the process may proceed to step 408. In step 408, the current picture or P-picture may be decoded. In step 410, the decoded current picture that results from step 408 may be re-encoded such that the re-encoded picture is independently decodable. In this regard, the decoded current picture may be re-encoded as an I-picture, for example. In step 412, the re-encoded picture may be recorded or stored in memory, such as an HDD or network storage, for example.

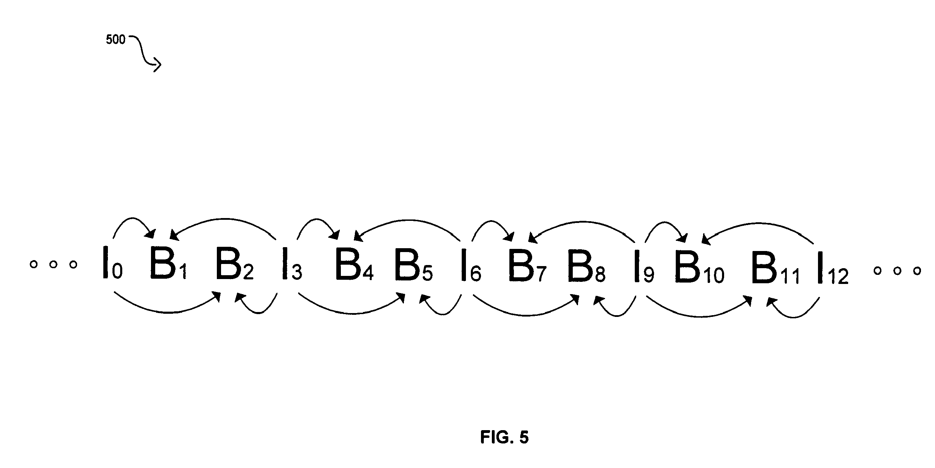

FIG. 5 is a diagram that illustrates the result of re-encoding all the P-pictures in FIG. 1 to I-pictures, in accordance with an embodiment of the invention. Referring to FIG. 5, there is shown an MPEG-2 picture stream 500 that may result from the transcoding operation described in FIG. 4. The MPEG-2 picture stream 500 may be characterized by a particular sequence of pictures types, such as the "I₀B₁B₂I₃B₄B₅I₆B₇B₈I₉B₁₀B₁₁I₁₂" sequence, that results from transcoding all the P-pictures in the MPEG-2 picture stream 200 in FIG. 2 to I-pictures. In this example, picture B₁₀ is predicted from pictures I₉ and I₁₂ and these pictures are independently decodable. As a result, only two pictures, pictures I₉ and I₁₂, may need to be decoded before picture B₁₀ may be decoded. This result is in contrast to the need for decoding five pictures, pictures I₀, P₃, P₆, P₉, and P₁₂, before picture B₁₀ is decoded in the MPEG-2 picture stream 200. The reduced decoding dependency may allow trick modes, and in some instances normal playback, to be implemented more efficiently.

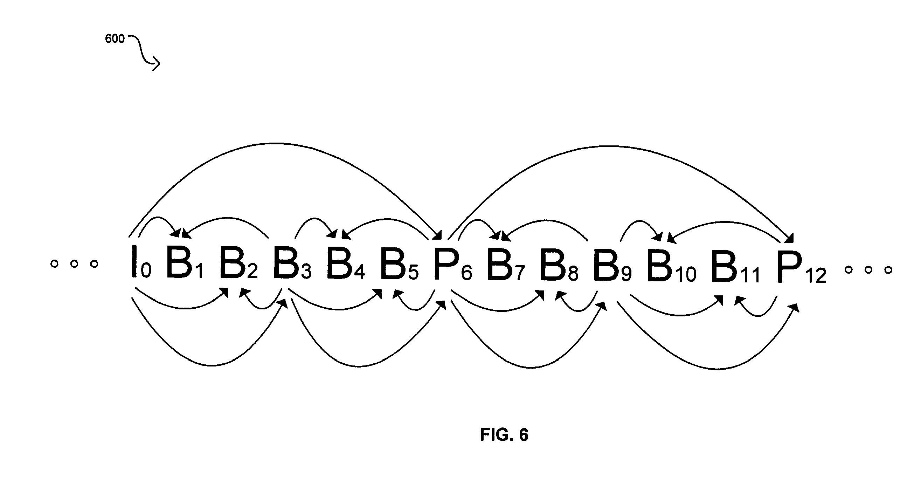

FIG. 6 illustrates exemplary use of B-pictures for prediction, which may be utilized in connection with an embodiment of the invention. Referring to FIG. 6, there is shown an AVC picture stream 600 that may be characterized by a particular sequence of pictures types, such as the "I₀B₁B₂B₃B₄B₅P₆B₇B₈B₉B₁₀B₁₁P₁₂" sequence. In this regard, one of the differences between the MPEG-2 standard and the AVC standard is that B-pictures may also be used for prediction in the AVC standard. In this example, picture B₁₀ is predicted from pictures B₉ and P₁₂. Pictures B₉ and P₁₂ are predicted from picture P₆, which in turn is predicted from picture I₀. Picture B₉ is also predicted from picture P₁₂. As a result of the dependency that exists between pictures in the AVC picture stream 600, four pictures, pictures l₀, P₆, B₉, and P₁₂, need to be decoded before picture B₁₀ may be decoded.

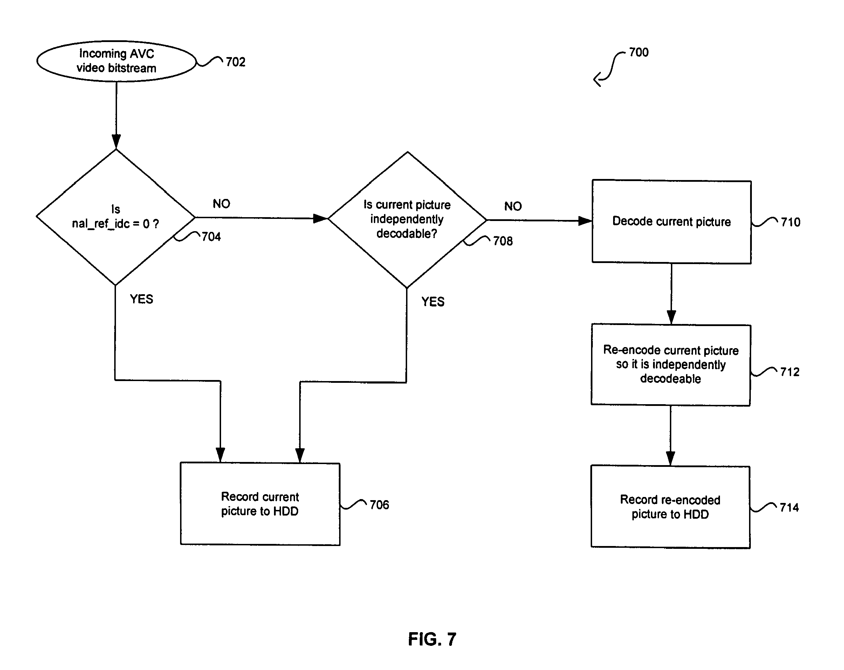

FIG. 7 is a diagram illustrating another exemplary embodiment for transcoding certain pictures in a digital video bit stream, in accordance with an embodiment of the invention. Referring to FIG. 7, there is shown a flow diagram 700. In step 702, an incoming AVC video stream may be received by, for example, a digital video recording device such as the DVR device 100 in FIG. 1. In step 704, a portion of the DVR device 100, such as one of the processing systems 108 through 110 or the host processor 104, for example, may verify that a current picture in the stream is such that the decoding of other pictures in the video stream is dependent on the current picture. In this regard, the AVC video syntax specifies nal_ref_idc as a field or signal in the NAL unit header that indicates whether a current picture is used as a reference picture or not. When the field nal_ref_idc is zero, the current picture is a non-reference picture, also referred to as a "discardable" picture. When the field nal_ref_idc is non-zero, the picture is a reference picture, also referred to as a "non-discardable" picture. When the field nal_ref_idc is zero, the current picture is not utilized as a reference frame or picture and the process may proceed to step 706. In step 706, the current picture may be recorded onto memory. In this regard, the memory in step 706 may be an HDD that may be part of a system memory, such as the system memory 102 in FIG. 1. The memory in step 706 may also be part of network storage that is external to the DVR device 100.

Returning to step 704, when field nal_ref_idc is non-zero, the current picture is a reference picture, that is, the current picture is utilized in decoding other pictures, and the process may proceed to step 708. In step 708, the DVR device 100 may verify whether current picture is independently decodable, that is, the decoding of the current picture is not dependent on other pictures. When the current picture is independently decodable, the process may proceed to step 706 where the current picture may be recorded to memory, such as an HDD or network storage. When the current picture is not independently decodable, then the process may proceed to step 710.

In step 710, the current picture may be decoded. In step 712, the decoded picture that results from step 710 may be re-encoded such that the re-encoded picture is independently decodable. In step 714, the re-encoded picture may be recorded or stored in memory, such as an HDD or network storage, for example. Note that the term transcoding may refer to the process of decoding and then re-encoding the current picture such that the re-encoded picture is independently decodable.

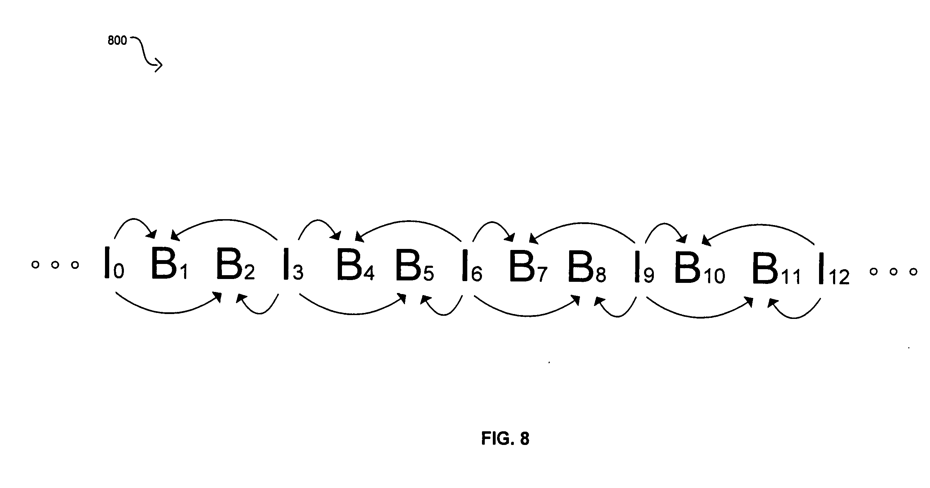

Table 1 illustrates the discardability and coding information of each of the pictures shown for the AVC picture stream 600 in FIG. 6. The results illustrated in Table 1 may be utilized to create a transcoded bit stream as shown in FIG. 8. Table 1 shows pictures B₃, P₆, B₉, and P₁₂ being re-encoded as I-pictures. As a result of the transcoding of pictures B₃, P₆, B₉, and P₁₂, the decoding dependency between pictures in the transcoded bit stream shown in FIG. 8 is greatly reduced from that of the AVC picture stream 600 in FIG. 6.

**Table 1: Properties of the Pictures in the AVC picture stream in FIG. 6.**

| Picture | 10 | B1 | B2 | B3 | B4 | B5 | P6 | B7 | B8 | B9 | B10 | B11 | P12 |
|---|---|---|---|---|---|---|---|---|---|---|---|---|---|
| Discardable? | No | Yes | Yes | No | Yes | Yes | No | Yes | Yes | No | Yes | Yes | No |
| I-slices only? | Yes | No | No | No | No | No | No | No | No | No | No | No | No |
| Re-encode? | No | No | No | Yes | No | No | Yes | No | No | Yes | No | No | Yes |

FIG. 8 is a block diagram illustrating application of the principles of FIG. 7 to the bit stream illustrated in FIG. 6, in accordance with an embodiment of the invention. Referring to FIG. 8, there is shown an AVC picture stream 800 that may result from the transcoding operation described in FIG. 7. The AVC picture stream 800 may be characterized by a particular sequence of pictures types, such as the "I₀B₁B₂I₃B₄B₅I₆B₇B₈I₉B₁₀B₁₁I₁₂" sequence, that results from transcoding pictures B₃, P₆, B₉, and P₁₂, in the AVC picture stream 600 in FIG. 6 to I-pictures. In this example, picture B₁₀ is predicted from pictures I₉ and I₁₂ and these pictures are independently decodable. As a result, only two pictures, pictures I₉ and I₁₂, may need to be decoded before picture B₁₀ may be decoded. This result is in contrast to the need for decoding four pictures, pictures I₀, P₆, B₉, and P₁₂, before picture B₁₀ is decoded in the AVC picture stream 600. The reduced decoding dependency may allow trick modes, and in some instances normal playback, to be implemented more efficiently.

A similar approach as described above for MPEG-2 and AVC video standards may be applied to other video standards such as, for example, VC-1, which is a draft SMPTE standard 421 M describing a video codec based on Windows Media Video version 9, and H.263, which is an ITU-T standard for digital video compression for videoconferencing.

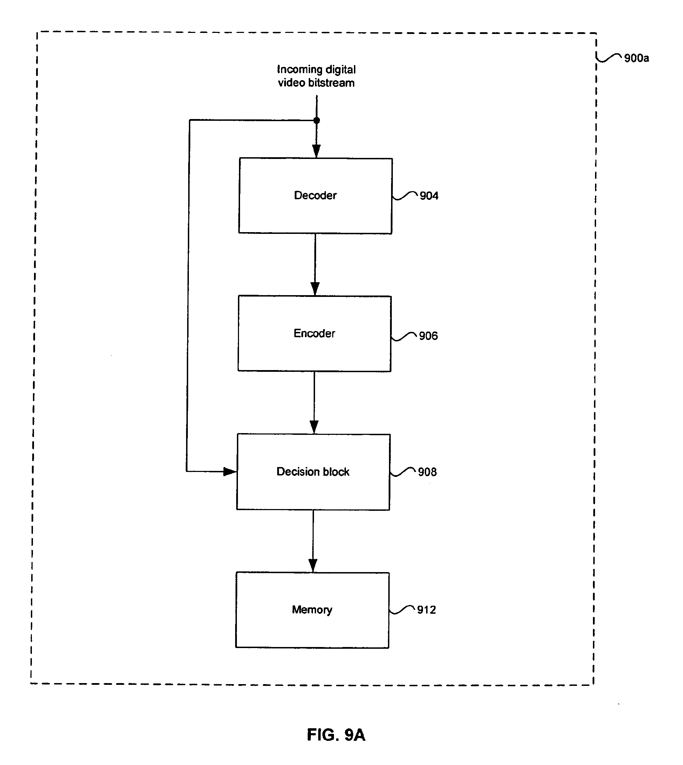

FIG. 9A is a block diagram that illustrates an exemplary system that may be utilized for enabling digital video recording trick modes, in accordance with an embodiment of the invention. Referring to FIG. 9A, there is shown a portion of a DVR device 900a that may comprise a decoder 904, an encoder 906, a decision block 908, and memory 912. The decoder 904 may comprise suitable logic, circuitry, and/or code that may enable decoding of pictures from the incoming digital video bit stream. The decoder 904 may support a plurality of video standards, such as MPEG-2, AVC, VC-1, and/or H.263, for example. In this regard, the decoder 904 may enable decoding of picture types in accordance with the supported video standards. The encoder 906 may comprise suitable logic, circuitry, and/or code that may enable encoding pictures from the decoder 904. The encoder 906 may support a plurality of video standards, such as MPEG-2, AVC, VC-1, and/or H.263, for example. In this regard, the encoder 906 may enable encoding of picture types in accordance with the supported video standards.

The decision block 908 may comprise suitable logic, circuitry, and/or code that may determine whether to transfer the original current picture from the incoming video bit stream and/or the re-encoded bit stream of the current picture as generated by the encoder 906 to the memory 912. In this regard, the decision block 908 may utilize header information, for example, to determine whether to store or record the original current picture and/or the re-encoded current picture. The memory 912 may comprise suitable logic, circuitry, and/or code that may enable storage or recording of the original current picture and/or the re-encoded current picture. In some instances, the memory 912 may be implemented utilizing an HDD, for example.

In operation, the incoming video bit stream may be transferred to the decoder 904 and to the decision block 908. The decoder 904 may decode current pictures and may communicate the decoded pictures to the encoder 906. The encoder 906 may encode the decoded pictures so that they are independently decodable and may communicate the re-encoded current pictures to the decision block 908. The decision block 908 may determine whether to record the original current picture received from the incoming digital video stream and/or the re-encoded current picture received from the encoder 906. The decision block 908 may record or store at least one of the original current picture and the re-encoded current picture in the memory 912.

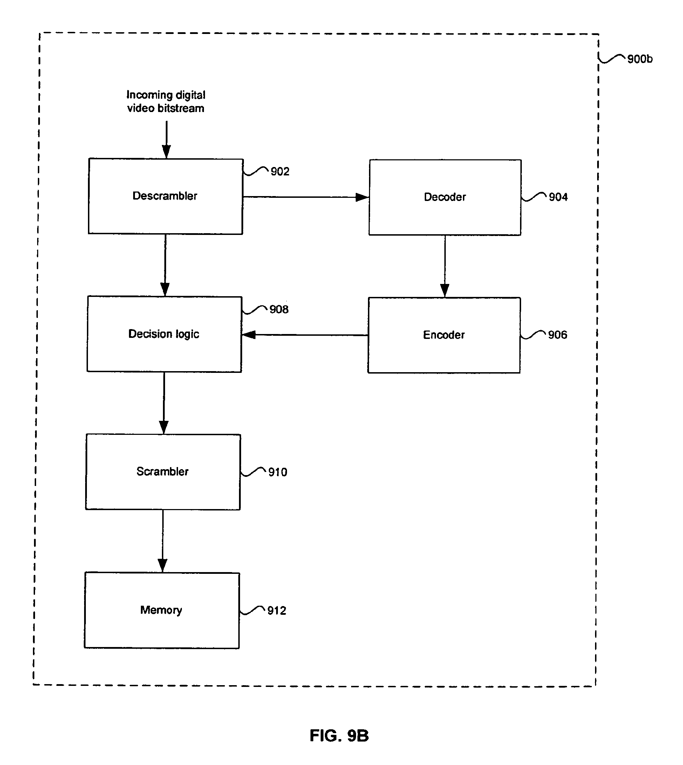

FIG. 9B is a block diagram that illustrates another exemplary system that may be utilized for enabling digital video recording trick modes, in accordance with an embodiment of the invention. Referring to FIG. 9B, there is shown a portion of a DVR device 900b that may differ from the DVR 900a in FIG. 9A in that a descrambler 902 and a scrambler 910 may be utilized. The decoder 904, the encoder 906, the decision block 908, and the memory 912 may be the same or substantially similar as those described in FIG. 9A. The descrambler 902 may comprise suitable logic, circuitry, and/or code that may enable descrambling the incoming video bit stream. In this regard, the descrambler 902 may utilize information provided by a security device, such as the security processor 106 in FIG. 1, for example. The descrambler 902 may communicate the results of the descrambling operation to the decoder 904 and to the decision block 908. The scrambler 910 may comprise suitable logic, circuitry, and/or code that may enable scrambling the output of the decision block 908. In this regard, the scrambler 910 may utilize information provided by a security device, such as the security processor 106 in FIG. 1, for example. The scrambler 910 may communicate the results of the scrambling operation to the memory 912.

In operation, the incoming video bit stream may be transferred to the descrambler 902 for descrambling. The descrambled incoming video bit stream may be communicated to the decoder 904 and to the decision block 908. The decoder 904 may decode current pictures and may communicate the decoded pictures to the encoder 906. The encoder 906 may encode the decoded pictures so that they are independently decodable and may communicate the re-encoded current pictures to the decision block 908. The decision block 908 may determine whether to record the descrambled current picture received from the descrambler 902 and/or the re-encoded current picture received from the encoder 906. The decision block 908 may communicate at least one of the descrambled current picture and the re-encoded current picture to the scrambler 910. The scrambler 910 may scramble the output of the decision block 908 and may communicate the scrambled output to the memory 912 for storage.

The decoder 904 in FIG. 9B may enable decoding a current picture in a video stream that is used in decoding at least one other picture in the video stream and does require information from any other picture to be decoded. In this regard, the current picture may be a P-picture, for example. The encoder 906 may enable re-encoding the decoded current picture so that it does not require information from any other picture to be decoded. The memory 912 may enable storing the re-encoded current picture. The decision logic 906 may enable identifying based on at least one signal, if the current picture is used in decoding at least one other picture in said video stream and does require information from any other picture to be decoded. The descrambler 902 may enable descrambling the current picture in the video stream before decoding. The scrambler 910 may enable scrambling the re-encoded current picture after re-encoding. The memory 912 may also enable storing the scrambled re-encoded current picture.

In some instances, the transcoding of certain pictures to independently decodable pictures may increase the bit rate necessary to represent those pictures compared to the original dependently decoded pictures. The bandwidth required for transfer to and from memory, such as a disk drive, may generally be much cheaper than the transmission bandwidth, that is, the terrestrial, cable, and/or satellite channel, and may not result in a system bottleneck, making the reduced compression efficiency of the re-encoded picture less of an issue.

The encoder 906 shown in FIGS. 9A and 9B, need not be a full implementation of a standard encoder since the encoder 906 may generally be limited to encoding pictures so as to be independently decodable. Moreover, a limited encoder need not be as concerned with compression efficiency as an encoder that is utilized to generate the original bit stream. For example, a standard encoder may likely need the capability to encode a picture as an I-picture, P-picture, or B-picture while for a limited encoder generating I-pictures may be sufficient. Therefore, a smaller and/or cheaper encoder may be utilized in the transcoding operations described herein. Substantial savings may be realized since encoders may often search or estimate among a large parameter space for efficient compression and a limited encoder may avoid these potential options in favor of reduced resources.

Since the re-encoded pictures may be utilized for trick modes such as fast-forward and rewind, it may not be necessary to preserve the numerical accuracy of each pixel. When such an approach is taken, recording both the original current picture and the re-encoded current picture may be useful. In this regard, the original current picture may be utilized for normal playback, where picture quality may be more noticeable and decoding dependency may not be an issue. The re-encoded current picture may then be utilized for trick modes, where picture quality is not as noticeable and decoding dependency may be an issue.

Error propagation may often be a concern in MPEG-2 pictures that have significant decoding dependencies across the bit stream. By re-encoding certain pictures, the decoding dependencies may be reduced which may also reduce possible error propagation.

The metadata that corresponds to the incoming digital video stream may need to be modified and/or updated to correspond to the characteristics of the re-encoded stream. For example, a transport random access indicator in a transport stream (TS) may need to be remarked to correspond to the transcoded TS. In another example, timing correction and/or timestamping correction may also be necessary. A buffer model for elementary streams (ESs) may also need to be adapted to the characteristics of the re-encoded stream. Moreover, audio and video synchronization may need to be corrected as a result of transcoding operations.

The approach described herein may enable a digital video processing device to implement trick modes more effectively and efficiently by reducing dependencies among pictures in a video bit stream and therefore reducing the resources necessary to perform the appropriate processing.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video information, the method comprising:
decoding a current picture in a video stream that is used in decoding at least one other picture in said video stream and does require information from any other picture to be decoded; and
re-encoding said decoded current picture so that it does not require information from any other picture to be decoded.

2. The method according to claim 1, further comprising storing said re-encoded current picture.

3. The method according to claim 2, further comprising storing said current picture.

4. The method according to claim 3, further comprising selecting said stored re-encoded current picture for trick mode operations.

5. The method according to claim 3, further comprising selecting said stored current picture for normal playback operations.

6. The method according to claim 1, further comprising identifying based on at least one signal, if said current picture is used in decoding at least one other picture in said video stream and does require information from any other picture to be decoded.

7. A machine-readable storage having stored thereon, a computer program having at least one code section for processing video information, the at least one code section being executable by a machine for causing the machine to perform steps comprising:
decoding a current picture in a video stream that is used in decoding at least one other picture in said video stream and does require information from any other picture to be decoded; and
re-encoding said decoded current picture so that it does not require information from any other picture to be decoded.

8. A system for processing video information, the system comprising:
circuitry that enables decoding a current picture in a video stream that is used in decoding at least one other picture in said video stream and does require information from any other picture to be decoded; and
said circuitry enables re-encoding said decoded current picture so that it does not require information from any other picture to be decoded.

9. The system according to claim 8, wherein said circuitry enables storing said re-encoded current picture.

10. The system according to claim 8, wherein said circuitry enables identifying based on at least one signal, if said current picture is used in decoding at least one other picture in said video stream and does require information from any other picture to be decoded.
